# EUROPEAN PATENT SPECIFICATION

(11) **EP 3 217 459 B1**
(45) Date of publication and mention of the grant of the patent: **13.02.2019**
(21) Application number: 15856690.1
(22) Date of filing: 21.10.2015
(51) Int. Cl.: H01M 8/18, H01M 8/0271

(54) **ELECTROLYTE-CIRCULATION BATTERY**
ELEKTROLYTZIRKULATIONSBATTERIE
BATTERIE À CIRCULATION D'ÉLECTROLYTE

(30) Priority: 05.11.2014 JP 2014225656
(43) Date of publication of application: 13.09.2017
(73) Proprietor: Sumitomo Electric Industries, Ltd., Osaka-shi, Osaka 541-0041 (JP)
(72) Inventor: KANNO, Takashi, Osaka-shi Osaka 554-0024 (JP); SATO, Ryo, Osaka-shi Osaka 554-0024 (JP); YAMANISHI, Katsuya, Osaka-shi Osaka 554-0024 (JP); ITO, Takefumi, Osaka-shi Osaka 554-0024 (JP)
(74) Representative: Boult Wade Tennant LLP
(86) International application number: PCT/JP2015/079622
(87) International publication number: WO 2016/072255

(56) References cited:
- WO-A1-02/101864
- WO-A1-2014/083387
- CN-A- 103 840 180
- JP-A- H0 842 700
- JP-A- H06 300 135
- JP-A- 2000 122 144
- JP-A- 2011 222 312
- US-A1- 2013 157 097

## Description

### Technical Field

The present invention relates to an electrolyte-circulating battery such as a redox flow battery. In particular, the present invention relates to an electrolyte-circulating battery in which a sealing structure of an electrolyte can be easily formed and which has a good assembling workability.

### Background Art

An example of large-capacity storage batteries that store the electric power derived from natural energy, for example, obtained by photovoltaic power generation or wind power generation, is an electrolyte-circulating battery such as a redox flow battery (RF battery). An RF battery is typically connected between a power generation unit (for example, a photovoltaic power generator, a wind power generator, or a typical power plant) and a load (for example, a power consumer) with an AC/DC converter therebetween, stores the electric power generated in the power generation unit by charging, and supplies the stored electric power to the load by discharging.

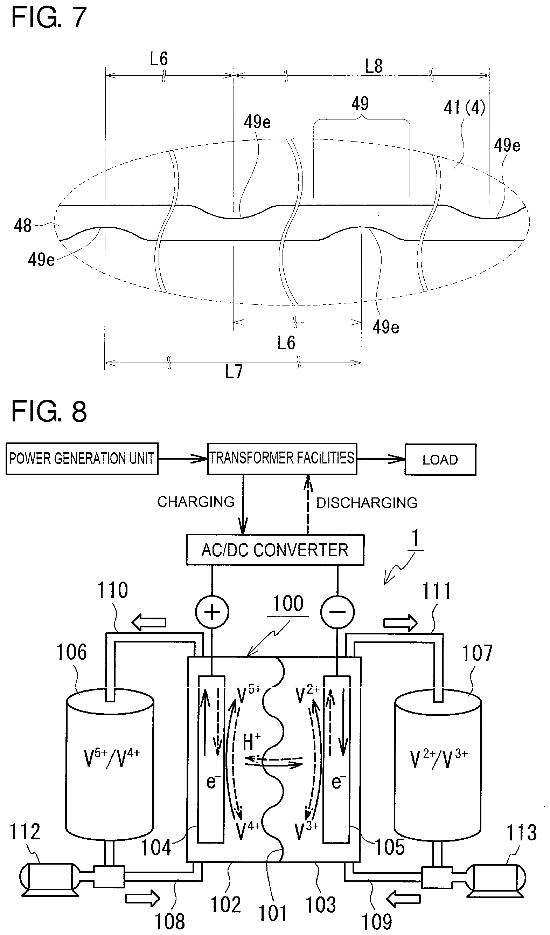

For example, as illustrated in the operation principle diagram of an RF battery of Fig. 8, an RF battery 1 includes a battery cell 100 which is separated into a positive electrode cell 102 and a negative electrode cell 103 by a membrane 101 that allows hydrogen ions to permeate. The positive electrode cell 102 contains a positive electrode 104 therein and is connected, via a supply duct 108 and a discharge duct 110, to a positive electrode electrolyte tank 106 that stores a positive electrode electrolyte. Similarly, the negative electrode cell 103 contains a negative electrode 105 therein and is connected, via a supply duct 109 and a discharge duct 111, to a negative electrode electrolyte tank 107 that stores a negative electrode electrolyte. The positive and negative electrode electrolytes are supplied from the supply ducts 108 and 109 to the electrode cells 102 and 103 by pumps 112 and 113 disposed in halfway positions of the supply ducts 108 and 109, respectively, and discharged from the electrode cells 102 and 103 to the electrode electrolyte tanks 106 and 107 through the discharge ducts 110 and 111, thereby being circulated through the electrode cells 102 and 103, respectively. The RF battery 1 circulates the electrolytes in this manner to perform charging and discharging by using the difference in redox potential between ions contained in the positive electrode electrolyte and ions contained in the negative electrode electrolyte. In Fig. 8, vanadium ions are illustrated as ions contained in the electrolytes of the electrodes, the solid-line arrows indicate charging, and the dotted-line arrows indicate discharging.

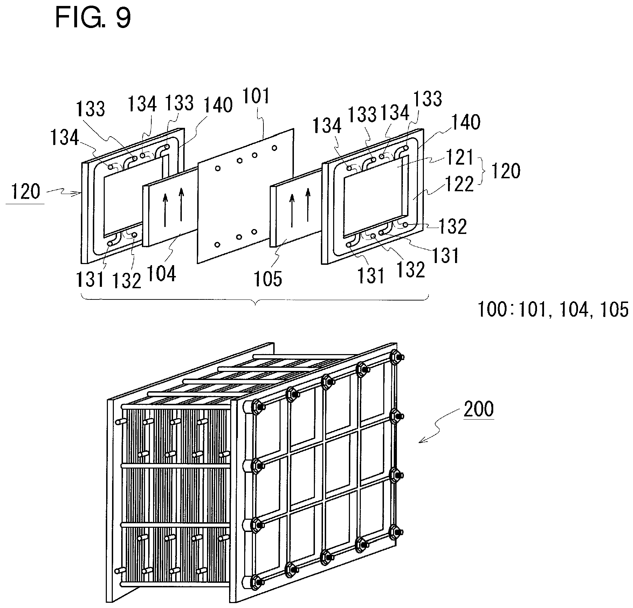

The battery cell 100 is typically formed inside a structure referred to as a cell stack 200 illustrated in the lower drawing of Fig. 9. As illustrated in the upper drawing of Fig. 9, the cell stack 200 includes a stacked body formed by stacking a cell frame 120, a positive electrode 104, a membrane 101, and a negative electrode 105 in that order. The cell frame 120 includes a bipolar plate 121 and a frame 122 that surrounds a peripheral edge of the bipolar plate 121. In the case of this structure, one battery cell 100 is formed between bipolar plates 121 of adjacent cell frames 120, and a positive electrode 104 (positive electrode cell 102) and a negative electrode 105 (negative electrode cell 103) of adjacent battery cells 100 are disposed on the front side and the back side of each bipolar plate 121.

The flow of the electrolyte of each of the electrodes in the battery cell 100 is performed through liquid-supplying manifolds 131 and 132 and liquid-discharging manifolds 133 and 134 which are formed on the frame 122. The positive electrode electrolyte is supplied from the liquid-supplying manifolds 131 to the positive electrode 104 through guide grooves formed on one surface side (front side of the sheet) of the frame 122. As indicated by the arrows in the upper drawing of Fig. 9, the positive electrode electrolyte passes from the lower side to the upper side of the positive electrode 104 and is discharged to the liquid-discharging manifolds 133 through guide grooves formed on the frame 122. Similarly, the negative electrode electrolyte is supplied from the liquid-supplying manifolds 132 to the negative electrode 105 through guide grooves formed on the other surface side (back side of the sheet) of the frame 122. The negative electrode electrolyte passes from the lower side to the upper side of the negative electrode 105 and is discharged to the liquid-discharging manifolds 134 through guide grooves formed on the frame 122. A ring-shaped sealing member 140 such as an O-ring is disposed between the frames 122 to suppress leakage of an electrolyte from the battery cell 100.

For example, Patent Literature 1 describes that leakage of an electrolyte in a cell is prevented by providing an inner peripheral seal groove and an outer peripheral seal groove each having a rectangular cross-sectional shape on both surfaces of a frame body (frame) at positions facing each other, and arranging an inner peripheral seal and an outer peripheral seal in the inner peripheral seal groove and the outer peripheral seal groove, respectively. O-rings are used as the inner peripheral seal and the outer peripheral seal to come in contact with a membrane under pressure and to seal the electrolyte.

US 2013/157097 A1 discloses (Fig.1 & [0041]-[0043] an electrolyte-circulating battery comprising a cell frame including a bipolar plate, and a frame (9) that surrounds a peripheral edge of the bipolar plate; and a sealing member (elastomer gasket) that is disposed on the frame and that prevents an electrolyte supplied to the battery cell from leaking out of the frame, wherein the frame has a gap (between 9 and G2) in which the sealing member is fitted, the gap includes a narrow section, formed by the protrusions 10, which are intended to leave uniform gaps to allow limited and uniform lateral expansion of the perimeter of the elastomer gaskets upon compression ([0043]). WO 2014/083387 A1 discloses Fig.1 an electrolyte-circulating battery comprising a cell frame including a bipolar plate, and a frame (3) that surrounds a peripheral edge of the bipolar plate; and a sealing member (O-ring) that is disposed on the frame and that prevents an electrolyte supplied to the battery cell from leaking out of the frame, wherein the frame has a seal groove (3g) in which the sealing member is fitted.

### Citation List

### Patent Literature

PTL 1: Japanese Unexamined Patent Application Publication No. 2002-367659

### Summary of Invention

### Technical Problem

A sealing member such as an O-ring formed of an elastic material is soft and has a long string-like shape, and thus the shape of the O-ring is not easily determined. Accordingly, even when the O-ring is fitted in a seal groove, the O-ring may easily become detached from the seal groove. An example means for suppressing this detachment of the O-ring is to fix the O-ring to the seal groove with an adhesive. However, it is necessary to apply the adhesive onto the seal groove in advance, and production efficiency decreases with an increase in the number of production steps.

The present invention has been made in view of the circumstances described above. An object of the present invention is to provide an electrolyte-circulating battery in which a sealing structure of an electrolyte can be easily formed and which has good production efficiency.

### Solution to Problem

An electrolyte-circulating battery according to an embodiment of the present invention includes a cell frame including a bipolar plate in contact with an electrode that forms a battery cell, and a frame that surrounds a peripheral edge of the bipolar plate; and a sealing member that is disposed on the frame and that prevents an electrolyte supplied to the battery cell from leaking out of the frame. The frame has a seal groove in which the sealing member is fitted. The seal groove includes a narrow section that causes the sealing member to elastically deform to prevent the sealing member from becoming detached from the seal groove. The narrow section has a width that is uniform in a depth direction of the seal groove.

### Advantageous Effects of Invention

According to the electrolyte-circulating battery, a sealing structure of an electrolyte can be easily formed, and good production efficiency is realized.

### Brief Description of Drawings

Figure 1 is a schematic plan view illustrating a cell frame included in a redox flow battery according to Embodiment 1.
Figure 2 is a partially enlarged view illustrating a seal groove of the cell frame illustrated in Fig. 1 in an enlarged manner.
Figure 3 is an (a)-(a) sectional view of the seal groove illustrated in Fig. 2.
Figure 4 is a partially enlarged view illustrating, in an enlarged manner, a narrow section in a seal groove of a cell frame included in a redox flow battery according to Embodiment 2.
Figure 5 is a partially enlarged view illustrating, in an enlarged manner, a narrow section in a seal groove of a cell frame included in a redox flow battery according to Embodiment 3.
Figure 6 is a partially enlarged view illustrating, in an enlarged manner, a narrow section in a seal groove of a cell frame included in a redox flow battery according to Embodiment 4.
Figure 7 is a partially enlarged view illustrating, in an enlarged manner, a narrow section in a seal groove of a cell frame included in a redox flow battery according to Embodiment 5.
Figure 8 is an operation principle diagram of a redox flow battery.
Figure 9 is a schematic structural view of a cell stack included in a redox flow battery.

### Reference Signs List

1 RF battery
2 cell frame
   3 bipolar plate
   4 frame
      41 liquid supply-side piece
      42 liquid discharge-side piece
      43 connection piece
      44 liquid-supplying manifold
      45 liquid-discharging manifold
      44a, 45a manifold seal groove
      46 liquid supply guide groove
      47 liquid discharge guide groove
      48 seal groove
         48i inner peripheral seal groove
         48o outer peripheral seal groove
         48L long straight-line section
         48S short straight-line section
         48C curved section
      49 narrow section
      49a, 49b, 49c, 49d, 49e protruding piece
5 sealing member
100 battery cell
101 membrane
102 positive electrode cell
103 negative electrode cell
104 positive electrode
105 negative electrode
106 positive electrode electrolyte tank
107 negative electrode electrolyte tank
108, 109 supply duct
110, 111 discharge duct
112, 113 pump
120 cell frame
   121 bipolar plate
   122 frame
131, 132 liquid-supplying manifold
133, 134 liquid-discharging manifold
140 sealing member
200 cell stack

### Description of Embodiments

### <<Description of embodiments of the present invention>>

First, the content of embodiments of the present invention will be listed and described.
(1) An electrolyte-circulating battery according to an embodiment of the present invention includes a cell frame including a bipolar plate in contact with an electrode that forms a battery cell, and a frame that surrounds a peripheral edge of the bipolar plate; and a sealing member that is disposed on the frame and that prevents an electrolyte supplied to the battery cell from leaking out of the frame. The frame has a seal groove in which the sealing member is fitted. The seal groove includes a narrow section that causes the sealing member to elastically deform to prevent the sealing member from becoming detached from the seal groove. The narrow section has a width that is uniform in a depth direction of the seal groove.

According to the structure described above, detachment of the sealing member from the seal groove can be suppressed by simply fitting the sealing member in the narrow section of the seal groove. This is because since the seal groove includes the narrow section that causes the sealing member to elastically deform, the sealing member is locally compressed, and a frictional force can be applied to the compressed portion in a longitudinal direction and in a depth direction of the seal groove. Therefore, an adhesive is not necessary to fix the sealing member to the seal groove, and a step of applying an adhesive is unnecessary. The sealing structure of an electrolyte can be formed without increasing the number of production steps. Accordingly, the structure described above realizes good production efficiency of the electrolyte-circulating battery.

In addition, since the width of the narrow section is uniform in the depth direction, production efficiency of the frame having the seal groove can be increased. This is because the seal groove including the narrow section can also be formed at the same time when the frame is produced, and thus the number of production steps is not increased. As in the structure described above, an example of the shape of a groove capable of suppressing detachment of the sealing member from the seal groove by simply fitting the sealing member in the seal groove is a trapezoidal shape or substantially trapezoidal shape whose width gradually increases in the depth direction, such as a dovetail groove. However, in the case of a frame having such a dovetail groove, the seal groove cannot be formed at the same time when the frame is produced, and thus it is necessary to separately perform grooving, resulting in an increase in the number of production steps. Although the frame is typically produced by, for example, injection molding, it is difficult to form a groove having a shape of a dovetail groove or the like by injection molding. This is because, in order to produce a frame having a dovetail groove, after a frame that does not have a dovetail groove is produced, it is necessary to form a groove by, for example, cutting so that the groove has a trapezoidal shape or a substantially trapezoidal shape.
(2) In an embodiment of the electrolyte-circulating battery, a width Wn (mm) of the narrow section may be 0.60D or more and 0.97D or less where D represents a diameter (mm) of the sealing member in a non-compressed state.

According to the structure described above, since the width Wn (mm) of the narrow section is 0.60D or more, it is easy to prevent the sealing member from degrading in early use due to crushing or excessive compression. Since the width Wn (mm) of the narrow section is 0.97D or less, detachment of the sealing member from the seal groove is easily prevented.
(3) In an embodiment of the electrolyte-circulating battery, the narrow sections may be disposed at intervals of 50 mm or more and 500 mm or less in a longitudinal direction of the seal groove.

According to the above structure, since a plurality of narrow sections are disposed at an interval of 50 mm or more, the interval of the narrow sections in the longitudinal direction of the seal groove is not excessively small. Therefore, the operation of fitting the sealing member in the seal groove is unlikely to be complicated. Since a plurality of narrow sections are disposed at an interval of 500 mm or less, detachment of the sealing member is easily prevented.
(4) In an embodiment of the electrolyte-circulating battery, the seal groove may include a curved section that curves in a longitudinal direction, and the narrow section may be disposed in the curved section.

According to the above structure, since the narrow section is disposed in the curved-line section (curved section) of the seal groove from which the sealing member becomes detached more easily than the straight-line section of the seal groove, detachment of the sealing member is effectively prevented.

### <<Details of embodiments of the present invention>>

Embodiments of the present invention will now be described with reference to the drawings. It is intended that the present invention is not limited to these examples but is defined by the claims described below, and that the scope of the present invention includes the meaning of equivalents of the claims and all modifications within the scope of the claims. Herein, a description will be made using a redox flow battery (RF battery) as an example of an electrolyte-circulating battery.

### [Embodiment 1]

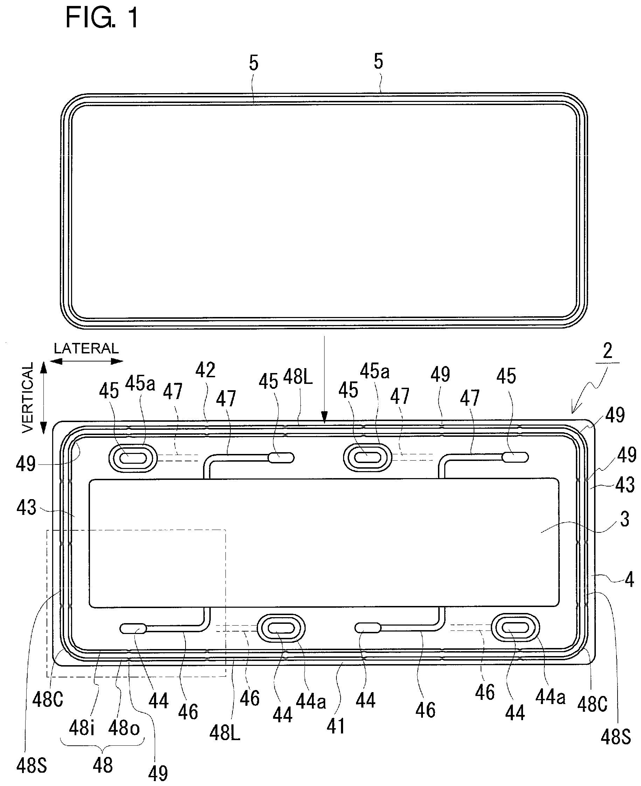

An RF battery according to Embodiment 1 includes, as in the existing RF battery described with reference to Figs. 8 and 9, a cell stack 200 that includes a stacked body of cell frames and battery cells 100, a positive electrode electrolyte tank 106 that stores a positive electrode electrolyte circulated through a positive electrode cell 102 of the battery cell 100, and a negative electrode electrolyte tank 107 that stores a negative electrode electrolyte circulated through a negative electrode cell 103 of the battery cell 100. The positive electrode electrolyte and the negative electrode electrolyte are respectively circulated through supply ducts 108 and 109 and discharge ducts 110 and 111 by pumps 112 and 113 disposed between the corresponding supply duct and the discharge duct. A main feature of the RF battery according to Embodiment 1 lies in the fixing structure of a sealing member to a cell frame, the structure being capable of preventing an electrolyte from leaking. Specifically, the RF battery according to Embodiment 1 includes a cell frame having a different structure from the cell frame 120 (Fig. 9) of the existing RF battery, and thus the difference will be mainly described below with reference to Figs. 1 to 3 (Figs. 8 and 9, as required). Components the same as those of the existing RF battery are assigned the same reference numerals as those in Figs. 8 and 9, and a description of those components is omitted.

### [Cell frame]

A cell frame 2 includes a bipolar plate 3 and a frame 4 that surrounds a peripheral edge of the bipolar plate 3. There are two types of the cell frame 2, namely, an intermediate cell frame disposed between adjacent battery cells 100 (Fig. 9) of the stacked body, and an end cell frame disposed on both ends of the stacked body. The front surface and the back surface of the bipolar plate 3 of the intermediate cell frame contact a positive electrode 104 of one battery cell 100 and a negative electrode 105 of the other battery cell 100. One surface of the bipolar plate 3 of the end cell frame contacts one of the positive electrode and the negative electrode of a battery cell 100. Regarding the structure of the front and back (positive electrode side/negative electrode side) surfaces of the cell frame 2, the intermediate cell frame and the end cell frame have the same structure.

### (Bipolar plate)

The bipolar plate 3 partitions adjacent battery cells 100 (Figs. 8 and 9) in principle. The bipolar plate 3 is a rectangular plate. The bipolar plate 3 may be formed of a material that allows an electric current to pass but does not allow an electrolyte to pass. In addition, the bipolar plate is preferably formed of a material having acid resistance and an appropriate rigidity. Examples of such a material include conductive materials containing carbon. Specific examples thereof include conductive plastics formed from graphite and a polyolefin organic compound or a chlorinated organic compound. The bipolar plate may be formed of a conductive plastic in which part of graphite is replaced with at least one of carbon black and diamond-like carbon. Examples of the polyolefin organic compound include polyethylene, polypropylene, and polybutene. Examples of the chlorinated organic compound include vinyl chloride, chlorinated polyethylene, and chlorinated paraffin. By forming the bipolar plate 3 using the material described above, the electrical resistance of the bipolar plate 3 can be reduced and good acid resistance is achieved.

### (Frame)

The frame 4 forms a region functioning as a battery cell 100 (Figs. 8 and 9) inside thereof. The frame 4 includes a liquid supply-side piece 41 having liquid-supplying manifolds 44 through which an electrolyte is supplied to the inside of the battery cell 100, and a liquid discharge-side piece 42 having liquid-discharging manifolds 45 through which an electrolyte is discharged to the outside of the battery cell 100. An end of the liquid supply-side piece 41 and an end of the liquid discharge-side piece 42 are connected to each other with a pair of connection pieces 43 facing each other and orthogonal to the liquid supply-side piece 41 and the liquid discharge-side piece 42. The frame 4 has a rectangular frame shape. The liquid supply-side piece 41 and the liquid discharge-side piece 42 form long pieces of the rectangular frame, and the connection pieces 43 form short pieces of the rectangular frame. In plan view of the cell frame 2, when a direction in which the liquid supply-side piece 41 and the liquid discharge-side piece 42 face each other is defined as a vertical direction, and a direction orthogonal to the vertical direction is defined as a lateral direction, the liquid supply-side piece 41 is located on the lower side in the vertical direction and the liquid discharge-side piece 42 is located on the upper side of the vertical direction. Specifically, the electrolyte flows in the direction from the lower side of the frame 4 in the vertical direction toward the upper side of the frame 4 in the vertical direction. A seal groove 48 is formed in a peripheral edge of the frame 4 so as to be located outside the liquid-supplying manifolds 44 and the liquid-discharging manifolds 45. The arrow at the center of Fig. 1 indicates that sealing members 5 are fitted in the seal groove 48.

### <Seal groove>

Sealing members 5 described below are fitted in the seal groove 48. The seal groove 48 is formed on both surfaces of the frame 4. Alternatively, the seal groove 48 is formed on one surface side (the front-surface side of the sheet of Fig. 1) and is not formed on the other surface side (the back-surface side of the sheet of Fig. 1) of the frame 4. In the case where the seal groove 48 is formed on both surfaces, when cell frames 2 are stacked, a sealing member 5 in the seal groove 48 is pressed by a sealing member fitted in a seal groove on another surface of an adjacent cell frame and seals the cell frames with each other. In this case, a membrane 101 (Figs. 8 and 9) is sandwiched between the sealing members. In the case where the seal groove 48 is formed on a surface and is not formed on another surface, when cell frames 2 are stacked, a sealing member 5 in the seal groove 48 is pressed by another surface of a frame of an adjacent cell frame and seals the cell frames with each other. In this case, the seal groove 48 is formed on one surface side (the front-surface side of the sheet of Fig. 1) of the frame 4 and is not formed on the other surface side (the back-surface side of the sheet of Fig. 1) of the frame 4. The seal groove 48 includes an inner peripheral seal groove 48i and an outer peripheral seal groove 48o. The seal groove 48 may include any one of the inner peripheral seal groove 48i and the outer peripheral seal groove 48o. The structures of the two seal grooves 48i and 48o are the same.

The seal groove 48 is formed so as to have a ring shape along the outer shape (long dimensions of the pieces 41 to 43) of the frame 4. The seal groove 48 includes long straight-line sections 48L that are formed in the liquid supply-side piece 41 and the liquid discharge-side piece 42 and that are linear in the longitudinal direction, short straight-line sections 48S that are formed in the connection pieces 43 and that are linear in the longitudinal direction, and curved sections 48C that are formed at corners of the frame 4, that connect between a long straight-line section 48L and a short straight-line section 48S, and that curve in the longitudinal direction of the seal groove 48. The seal groove 48 includes narrow sections 49.

Each of the narrow sections 49 causes a sealing member 5 to elastically deform to prevent the sealing member 5 from becoming detached from the seal groove 48. The term "narrow section 49" refers to a section having a narrower groove width than other sections in the longitudinal direction of the seal groove 48. A width Wn of the narrow section 49 is less than a diameter D (mm) of the sealing member 5 in the non-compressed state. In other words, the width of each wide section other than the narrow sections 49 is equal to or more than the diameter D of the sealing member 5. Therefore, in the wide section, a space is formed between the sealing member 5 and the seal groove 48. The sealing member 5 can be easily fitted in the wide sections, and detachment of the sealing member 5 from the seal groove 48 can be suppressed by simply fitting the sealing member 5 in the narrow sections 49. This is because the narrow sections 49 can apply a suitable frictional force to the sealing member 5 in the longitudinal direction of the sealing member 5 and in the depth direction of the seal groove 48.

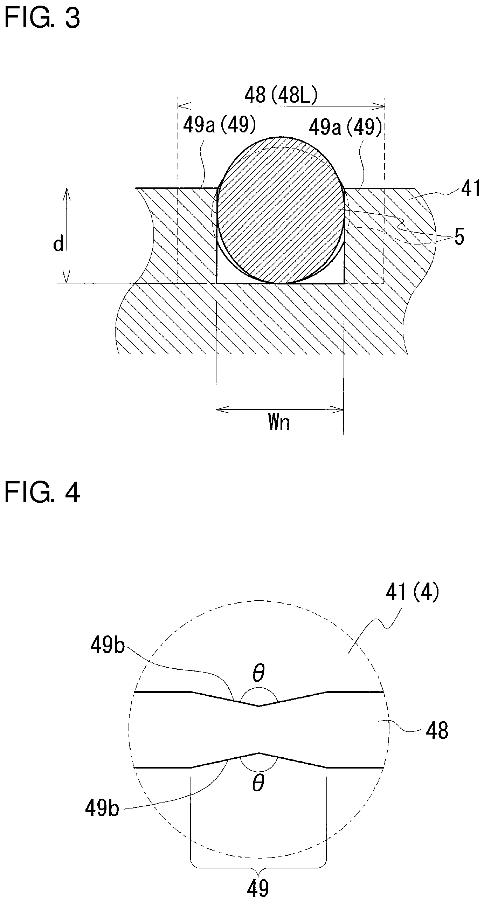

Each of the narrow sections 49 has a width Wn that is uniform in the depth direction of the seal groove 48 (Fig. 3). This structure can increase production efficiency of the frame 4 having the seal groove 48. The reason for this is as follows. The frame 4 can be typically produced by, for example, injection molding. In the case where the width Wn of the narrow section 49 is uniform in the depth direction of the seal groove 48, the seal groove 48 can also be formed at the same time when the frame 4 is produced. Thus, it is not necessary to separately perform grooving or the like, and the number of production steps does not increase. For example, if the seal groove has a trapezoidal shape or substantially trapezoidal shape whose width gradually increases in the depth direction, as in the case of a dovetail groove, from the viewpoint of removing a molded body from a mold, the seal groove cannot be formed at the same time when the frame is produced. Thus, it is necessary to separately perform grooving, resulting in an increase in the number of production steps. This is because, after a frame that does not have a dovetail groove is produced, it is necessary to perform grooving by, for example, cutting so as to form a seal groove having a trapezoidal shape or a substantially trapezoidal shape.

The width Wn (mm) of the narrow section 49 can be appropriately selected in accordance with the diameter D (mm) of the sealing member 5 in the non-compressed state so that the narrow section 49 does not cause the sealing member 5 to excessively elastically deform and does not cause the sealing member 5 to become detached. Herein, the term "width Wn" of the narrow section 49 refers to a width of a portion of the seal groove 48, the portion having the narrowest width. The width Wn of the narrow section 49 is preferably 0.60D or more and 0.97D or less though it depends on the material of the sealing member 5. When the width Wn of the narrow section 49 is 0.60D or more, it is easy to prevent the sealing member 5 from degrading in early use due to crushing or excessive compression by the inner wall of the narrow section 49. When the width Wn of the narrow section 49 is 0.97D or less, detachment of the sealing member 5 from the seal groove 48 is easily prevented. The width Wn of the narrow section 49 is more preferably 0.88D or more and 0.97D or less. The width Wn of the narrow section 49 satisfying 0.60D or more and 0.97D or less means that the compressibility of the sealing member 5 in the width direction is 3% or more and 40% or less. The compressibility in the width direction is defined as "{ (diameter D of sealing member 5 - width Wn of narrow section 49)/(diameter D of sealing member 5) × 100}".

A depth d (mm) of the seal groove 48 is preferably 0.6D or more and 0.9D or less though it depends on the material of the sealing member 5. When the depth d of the seal groove 48 is 0.6D or more, detachment of the sealing member 5 from the seal groove 48 is easily prevented. In addition, since a region of the sealing member 5 exposed from the seal groove 48 is not excessively large, it is easy to prevent the sealing member 5 from being crushed by the adjacent cell frame or a sealing member provided on the adjacent cell frame (hereinafter, may be referred to as "adjacent member"). When the depth d of the seal groove 48 is 0.9D or less, the region of the sealing member 5 exposed from the seal groove 48 can be appropriately ensured, and the sealing member 5 is easily and sufficiently compressed by the adjacent member. The depth d of the seal groove 48 is more preferably 0.7D or more and 0.8D or less. The depth d of the seal groove 48 satisfying 0.6D or more and 0.9D or less means that the compressibility of the sealing member 5 in the depth direction is 10% or more and 40% or less. The compressibility in the depth direction is defined as "{ (diameter D of sealing member 5 - depth d of seal groove 48)/(diameter D of sealing member 5) × 100}".

A total (Wn + d) of the width Wn of the narrow section 49 and the depth d of the seal groove 48 is preferably 1.2D or more and 1.8D or less. When the total (Wn + d) of the narrow section 49 is 1.2D or more and 1.8D or less, the sealing member 5 is sufficiently easily compressed, crushing of the sealing member 5 is easily prevented, and detachment of the sealing member 5 from the seal groove 48 is easily prevented. The total (Wn + d) of the narrow section 49 is more preferably 1.6D or more and 1.7D or less. Specifically, the total of the compressibility in the width direction and the compressibility in the depth direction preferably satisfies 20% or more and 80% or less. This total of the compressibility particularly preferably satisfies 40% or less.

A volume-occupying ratio of the sealing member 5 in the seal groove 48 is preferably 100% or less. This volume-occupying ratio is defined as (VS/VG) × 100 where VG (mm³) represents the volume of the seal groove 48 and VS (mm³) represents the volume of the sealing member 5 in the non-compressed state. When the volume-occupying ratio is 100% or less, it is easy to prevent the sealing member 5 from being crushed, and it is possible to suppress the application of an excessive pressure onto the seal groove 48 when the sealing member 5 is compressed, and thus crushing of the seal groove 48 is also easily prevented. Since the volume-occupying ratio is 100% or less, when the sealing member 5 is compressed, a space is formed between the sealing member 5 and the seal groove 48 in a portion (wide section) other than the narrow sections 49. The volume-occupying ratio of the sealing member 5 in the seal groove 48 is preferably 50% or more. In this case, leakage of an electrolyte is more easily prevented over the entire perimeter of the frame 4. The volume-occupying ratio is particularly preferably 50% or more and 90% or less.

The narrow section 49 is formed in each of the long straight-line section 48L, the short straight-line section 48S, and the curved section 48C (Fig. 1). The seal groove 48 may include only a single narrow section 49. Alternatively, as in this example, when the seal groove 48 includes a plurality of narrow sections 49 at appropriate positions over the entire perimeter of the seal groove 48, detachment of the sealing member 5 is easily prevented. The narrow section 49 may be provided in at least one of the long straight-line section 48L, the short straight-line section 48S, and the curved section 48C. However, the narrow section 49 is preferably provided in all the three sections, as in this example. A plurality of narrow sections 49 are preferably provided at opposite positions and/or diagonal positions in the seal groove 48. As in this example, the narrow sections 49 are more preferably disposed in the long straight-line sections 48L and the short straight-line sections 48S located at opposite positions and in the curved sections 48C located at diagonal positions. Forming the narrow sections 49 in the curved sections 48C is effective to prevent the sealing member 5 from becoming detached because the sealing member 5 becomes easily detached from the curved sections 48C compared with the long straight-line sections 48L and the short straight-line sections 48S. In the curved sections 48C, the narrow sections 49 are formed at the center or substantially the center of the curved sections 48C in the longitudinal direction (the center or substantially the center of the arc).

The interval of adjacent narrow sections 49 in the longitudinal direction of the seal groove 48 is determined so that, for example, detachment of the sealing member 5 can be prevented and the operation of fitting the sealing member 5 in the seal groove 48 is unlikely to be complicated. Specifically, the interval is preferably 50 mm or more and 500 mm or less, and more preferably 100 mm or more and 200 mm or less in the longitudinal direction of the seal groove 48.

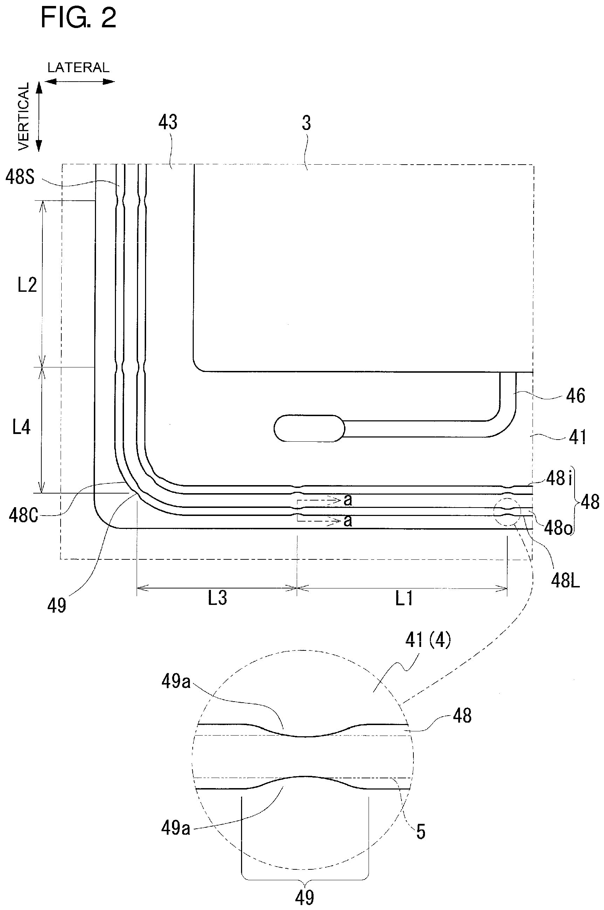

The interval of adjacent narrow sections 49 may be uniform over the entire perimeter of the seal groove 48 or may be uniform in each of the liquid supply-side piece 41, the liquid discharge-side piece 42, and the connection pieces 43. In the latter case, as long as an interval L1 between narrow sections 49 in the long straight-line section 48L is uniform and an interval L2 between narrow sections 49 in the short straight-line section 48S is uniform, the interval L1 need not be the same as the interval L2 (Fig. 2). An interval L3 and an interval L4 are preferably uniform, the interval L3 being a distance between a narrow section 49 of the curved section 48C and, among narrow sections 49 of the long straight-line section 48L, a narrow section 49 adjacent to the narrow section 49 of the curved section 48C, and the interval L4 being a distance between the narrow section 49 of the curved section 48C and, among narrow sections 49 of the short straight-line section 48S, a narrow section 49 adjacent to the narrow section 49 of the curved section 48C. However, the interval L3 and the interval L4 may become non-uniform as a result of making the interval L1 and the interval L2 uniform. The interval L3 and the interval L4 are respectively defined as a length of the long straight-line section 48L and a length of the short straight-line section 48S in the longitudinal direction.

In this embodiment, the interval L1 between the narrow sections 49 in the long straight-line section 48L is a regular interval of 150 mm, and the interval L2 between narrow sections 49 in the short straight-line section 48S is a regular interval of 120 mm. The interval L3 is about 115 mm, and the interval L4 is about 90 mm.

The form of the narrow section 49 is not particularly limited as long as the width of the narrow section 49 is narrower than the width of other portions of the seal groove 48. In this embodiment, as illustrated in the circle shown by the one-dotted chain line in Fig. 2 in an enlarged manner, the narrow section 49 is formed of protruding pieces 49a that face each other in the width direction of the seal groove 48 and that protrude in an arc shape in a direction in which the protruding pieces 49a face each other. In the partially enlarged view of Fig. 2, for the sake of convenience of explanation, the sealing member 5 is omitted. In the circle shown by the one-dotted chain line in the figure, the sealing member 5 is indicated by the two-dotted chain line.

The outline shape of each of the protruding pieces 49a can be appropriately selected. In this embodiment, the protruding piece 49a has an outline corresponding to a shape of an arc in which an apex is curved. Since the apex of the protruding piece 49a is curved, a frictional force can be applied to the sealing member 5 without damaging the sealing member 5. The bend radius of the protruding piece 49a can be appropriately selected. For example, the bend radius of the protruding piece 49a is preferably 1 mm or more and 50 mm or less, and particularly preferably 5 mm or more and 20 mm or less.

Examples of the material of the frame 4 include materials that satisfy acid resistance, electric insulation, and mechanical properties. Examples of such materials include fluororesins such as polytetrafluoroethylene, polypropylene resins, polyethylene resins, and vinyl chloride resins. In this embodiment, the frame 4 is formed of a rigid vinyl chloride resin.

### [Sealing member]

The sealing members 5 prevent an electrolyte supplied to the battery cell 100 (Figs. 8 and 9) from leaking out of the frame 4 (Fig. 1). Specifically, each of the sealing members 5 is disposed in the seal groove 48 and, when cell frames 2 are stacked as described above, the sealing member 5 is pressed by a sealing member fitted in a seal groove on another surface of a frame of an adjacent cell frame or by another surface of a frame of an adjacent cell frame and elastically deformed, thereby sealing the cell frames 2 with each other.

For example, an O-ring is used as the sealing member 5. The cross-sectional shape of the sealing member 5 is a circular shape in the non-compressed state. As schematically illustrated in Fig. 3, when the sealing member 5 is fitted in the seal groove 48, the cross-sectional shape of the sealing member 5 is, in the narrow section 49, an elliptical shape whose major axis extends in the depth direction and is, in portions other than the narrow section 49, a circular shape similar to that in the non-compressed state.

Examples of the material of the sealing member 5 include elastic materials having good acid resistance. Suitable examples of the material of the sealing member 5 include rubbers such as ethylene-propylene-diene rubber (EPDM), fluororubber, and silicone rubber.

### [Others]

The liquid supply-side piece 41 has liquid supply guide grooves 46 each extending between the corresponding liquid-supplying manifold 44 and the bipolar plate 3 to guide an electrolyte from the liquid-supplying manifold 44 to the bipolar plate 3. Similarly, the liquid discharge-side piece 42 has liquid discharge guide grooves 47 each extending between the corresponding liquid-discharging manifold 45 and the bipolar plate 3 to guide an electrolyte from the bipolar plate 3 to the liquid-discharging manifold 45. The liquid supply guide grooves 46 and the liquid discharge guide grooves 47 are covered with a plastic protective plate (not shown) when the stacked body is formed. With this structure, the electrolyte is allowed to flow between the liquid-supplying manifold 44 and the bipolar plate 3 and between the liquid-discharging manifold 45 and the bipolar plate 3 without leaking from the liquid supply guide groove 46 and the liquid discharge guide groove 47.

Manifold seal grooves 44a and 45a (Fig. 1) in which sealing members (not shown) are fitted are preferably formed in the outer peripheries of the liquid-supplying manifolds 44 and the liquid-discharging manifolds 45 that respectively supply and discharge the electrolyte to the other surface side (the back-surface side of the sheet in Fig. 1). The manifold seal grooves 44a and 45a preferably have narrow sections (not shown) similar to the narrow sections 49 described above. In such a case, leakage of the electrolyte from the liquid-supplying manifolds 44 and the liquid-discharging manifolds 45 can be suppressed.

### [Operation and effect]

According to the RF battery of Embodiment 1, since the seal groove 48 includes the narrow section 49 that causes the sealing member 5 to elastically deform, detachment of the sealing member 5 from the seal groove 48 can be suppressed by simply fitting the sealing member 5 in the narrow section 49 of the seal groove 48. This is because a frictional force can be applied, in the longitudinal direction and in the depth direction of the seal groove 48, to a local position of the sealing member 5 deformed by the narrow section 49. Therefore, an adhesive is not necessary to fix the sealing member 5 to the seal groove 48, and a step of applying an adhesive is unnecessary. The sealing structure of an electrolyte can be formed without increasing the number of production steps. In addition, since the width of the narrow section 49 is uniform in the depth direction, production efficiency of the frame 4 having the seal groove 48 can be increased. This is because the seal groove 48 including the narrow section 49 can be formed at the same time when the frame 4 is produced, and thus the number of production steps is not increased. Accordingly, the structure described above realizes good production efficiency of the RF battery.

### [Embodiment 2]

In Embodiment 2, as illustrated in Fig. 4, a narrow section 49 can be formed by protruding pieces 49b each having an outline corresponding to a shape of an angle bracket (>). In the angle bracket (>) shape, two sides adjacent to an apex form a corner. The lengths of the two sides are equal to each other. An angle θ formed by the two sides can be appropriately selected and may be, for example, an acute angle. In particular, the angle θ is preferably an obtuse angle. When the angle θ formed by the two sides is an obtuse angle, the sealing member 5 is unlikely to be damaged, and detachment of the sealing member 5 from the seal groove 48 can be prevented by applying a frictional force to the sealing member 5. The angle θ formed by the two sides is preferably, for example, 60° or more and 160° or less, and particularly preferably 100° or more and 140° or less.

### [Embodiment 3]

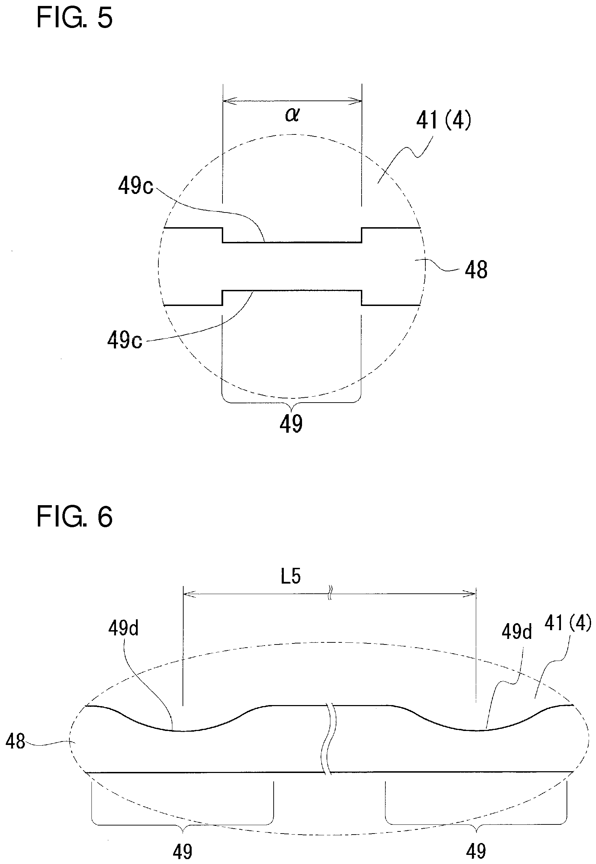

In Embodiment 3, as illustrated in Fig. 5, a narrow section 49 can be formed by protruding pieces 49c each having an outline corresponding to a shape of a bracket (]). In the bracket (]) shape, the width of a seal groove 48 does not change in the longitudinal direction of the seal groove 48. When the protruding piece 49c has an outline corresponding to the shape of the bracket (]), the contact area between the narrow section 49 and the sealing member 5 can be increased, and detachment the sealing member 5 from the seal groove 48 is easily prevented. A length α of the bracket (]) shape in the longitudinal direction of the seal groove 48 is preferably 5 mm or more and 50 mm or less. When the length α of the bracket (]) shape is 5 mm or more, the contact area between the protruding piece 49c and the sealing member 5 can be increased. When the length α of the bracket (]) shape is 50 mm or less, the length of the narrow section 49 is not excessively long, and the operation of fitting the sealing member 5 in the narrow section 49 is unlikely to be complicated. The length α of the bracket (]) shape is particularly preferably 10 mm or more an 20 mm or less.

### [Embodiment 4]

In Embodiment 4, as illustrated in Fig. 6, narrow sections 49 can be formed by providing, on only one surface of a seal groove 48 in the width direction, protruding pieces 49d that protrude from the one surface toward the other surface, and a flat surface on the other surface of the seal groove 48. Examples of the outline shape of each of the protruding pieces 49d include an arc shape (Fig. 2), an angle bracket (>) shape (Fig. 4), and a bracket (]) shape (Fig. 5) that are respectively similar to those of the protruding pieces 49a to 49c in Embodiments 1 to 3. In this embodiment, the protruding piece 49d has an outline corresponding to a shape of an arc similar to that of the protruding piece 49a in Embodiment 1. An interval L5 between adjacent protruding pieces 49d in the longitudinal direction of the seal groove 48 preferably satisfies a range similar to the interval L1 between the protruding pieces 49a in Embodiment 1 and is preferably uniform.

### [Embodiment 5]

In Embodiment 5, as illustrated in Fig. 7, narrow sections 49 can be formed by protruding pieces 49e alternately formed in a shifted manner in the longitudinal direction of a seal groove 48 and a flat surface that faces the protruding pieces 49e. Examples of the outline shape of each of the protruding pieces 49e include an arc shape (Fig. 2), an angle bracket (>) shape (Fig. 4), and a bracket (]) shape (Fig. 5). In this embodiment, the protruding piece 49e has an outline corresponding to a shape of an arc similar to that of the protruding piece 49a in Embodiment 1. An interval L6 between protruding pieces 49e that are alternately disposed preferably satisfies a range similar to the interval L1 between the protruding pieces 49a in Embodiment 1 and is preferably uniform. Specifically, an interval L7 between protruding pieces 49e on one surface of the seal groove 48 in the width direction and an interval L8 between protruding pieces 49e on the other surface of the seal groove 48 are each preferably about double the interval L1 between the protruding pieces 49a in Embodiment 1, that is, preferably 100 mm or more and 1,000 mm or less, and preferably 200 mm or more and 400 mm or less. In addition, the interval L7 and the interval L8 are each preferably uniform.

### [Modifications]

All the narrow sections 49 provided in the seal groove 48 may have the same shape, as described in Embodiment 1. Alternatively, the seal groove 48 may have narrow sections 49 having various shapes described in Embodiments 1 to 5 in combination.

### Industrial Applicability

The electrolyte-circulating battery according to an embodiment of the present invention can be suitably used in applications for the purpose of stabilizing variations in power output, storing generated power during oversupply, load leveling, and the like for new-energy power generation such as photovoltaic power generation or wind power generation. The electrolyte-circulating battery according to an embodiment of the present invention can also be additionally provided in a general power plant and suitably used as a large-capacity storage battery as a countermeasure against an instantaneous voltage drop/power failure and for the purpose of load leveling.

## Claims

1. An electrolyte-circulating battery (1) comprising a cell frame (2) including a bipolar plate (3) in contact with an electrode that forms a battery cell (100), and a frame (4) that surrounds a peripheral edge of the bipolar plate (3); and a sealing member (5) that is disposed on the frame (4) and that prevents an electrolyte supplied to the battery cell (100) from leaking out of the frame (4),
**characterised in that** the frame (4) has a seal groove (48) in which the sealing member (5) is fitted,
the seal groove (48) includes a narrow section (49) that causes the sealing member (5) to elastically deform to prevent the sealing member (5) from becoming detached from the seal groove (48), and
the narrow section (49) has a width that is uniform in a depth direction of the seal groove (48).

2. The electrolyte-circulating battery (1) according to Claim 1,
wherein when a diameter of the sealing member (5) in a non-compressed state is represented by D (mm) and the width of the narrow section (49) is represented by Wn (mm),
the width Wn of the narrow section (49) is 0.60D or more and 0.97D or less.

3. The electrolyte-circulating battery (1) according to Claim 1 or 2,
wherein the narrow sections (49) are disposed at intervals of 50 mm or more and 500 mm or less in a longitudinal direction of the seal groove (48).

4. The electrolyte-circulating battery (1) according to any one of Claims 1 to 3,
wherein the seal groove (48) includes a curved section (48C) that curves in a longitudinal direction, and
the narrow section (49) is disposed in the curved section (48C).

## Patentansprüche

1. Batterie (1) mit Elektrolytumwälzung umfassend einen Zellenrahmen (2) mit einer bipolaren Platte (3) in Kontakt mit einer Elektrode, die eine Batteriezelle (100) bildet, und einen Rahmen (4), der eine Umfangskante der bipolaren Platte (3) umgibt; und ein Dichtungselement (5), das an dem Rahmen (4) angeordnet ist und verhindert, dass ein der Batteriezelle (100) zugeführter Elektrolyt aus dem Rahmen (4) austritt,
**dadurch gekennzeichnet, dass** der Rahmen (4) eine Dichtungsnut (48) aufweist, in welche das Dichtungselement (5) eingepasst ist,
die Dichtungsnut (48) einen engen Abschnitt (49) umfasst, der bewirkt, dass sich das Dichtungselement (5) elastisch deformiert, um zu verhindern, dass sich das Dichtungselement (5) von der Dichtungsnut (48) löst und
wobei der enge Abschnitt (49) eine Breite aufweist, die in Richtung der Tiefe der Dichtungsnut (48) gleichmäßig ist.

2. Batterie (1) mit Elektrolytumwälzung nach Anspruch 1, wobei
wenn ein Durchmesser des Dichtungselements (5) in einem nicht komprimierten Zustand durch D (mm) dargestellt wird und die Breite des engen Abschnitts (49) durch Wn (mm) dargestellt wird,
die Breite Wn des engen Abschnitts (49) 0,60 D oder mehr und 0,97 D oder weniger beträgt.

3. Batterie (1) mit Elektrolytumwälzung nach Anspruch 1 oder 2, wobei
die engen Abschnitte (49) in Abständen von 50 mm oder mehr und 500 mm oder weniger in einer Längsrichtung der Dichtungsnut (48) angeordnet sind.

4. Batterie (1) mit Elektrolytumwälzung nach einem der Ansprüche 1-3, wobei
die Dichtungsnut (48) einen gekrümmten Abschnitt (48 C) umfasst, der sich in einer Längsrichtung krümmt, und
der enge Abschnitt (49) in dem gekrümmten Abschnitt (48 C) angeordnet ist.

## Revendications

1. Accumulateur à circulation d'électrolyte (1) comprenant un cadre d'élément d'accumulateur (2) incluant une plaque bipolaire (3) en contact avec une électrode qui forme un élément d'accumulateur (100), et un cadre (4) qui entoure un bord périphérique de la plaque bipolaire (3) ; et un élément de scellement (5) qui est disposé sur le cadre (4) et qui évite qu'un électrolyte introduit dans l'élément d'accumulateur (100) ne fuit à l'extérieur du cadre (4),
**caractérisé en ce que** le cadre (4) présente une rainure de scellement (48) dans laquelle l'élément de scellement (5) est monté,
la rainure de scellement (48) comprend une section étroite (49) qui occasionne que l'élément de scellement (5) se déforme élastiquement pour éviter que l'élément de scellement (5) ne se détache de la rainure de scellement (48), et
la section étroite (49) présente une largeur qui est uniforme dans une direction de profondeur de la rainure de scellement (48).

2. Accumulateur à circulation d'électrolyte (1) selon la revendication 1,
dans lequel lorsqu'un diamètre de l'élément de scellement (5) dans un état non comprimé est représenté par D (mm) et la largeur de la section étroite (49) est représentée par Wn (mm),
la largeur Wn de la section étroite (49) est de 0,60D ou supérieure et de 0,97D ou inférieure.

3. Accumulateur à circulation d'électrolyte (1) selon la revendication 1 ou 2,
dans lequel les sections étroites (49) sont disposées à des intervalles de 50 mm ou supérieurs et de 500 mm ou inférieurs dans une direction longitudinale de la rainure de scellement (48).

4. Accumulateur à circulation d'électrolyte (1) selon l'une quelconque des revendications 1 à 3,
dans lequel la rainure de scellement (48) comprend une section courbée (48C) qui se courbe dans une direction longitudinale, et
la section étroite (49) est disposée dans la section courbée (48C).
